(19) Europäisches Patentamt
European Patent Office
Office européen des brevets

(11) **EP 2 281 135 B1**

(12) **EUROPÄISCHE PATENTSCHRIFT**

(45) Veröffentlichungstag und Bekanntmachung des Hinweises auf die Patenterteilung:
**29.05.2013   Patentblatt 2013/22**

(21) Anmeldenummer: **09738159.4**

(22) Anmeldetag: **28.04.2009**

(51) Int Cl.:
***F16L 27/08*** *(2006.01)*

(86) Internationale Anmeldenummer:
**PCT/EP2009/055147**

(87) Internationale Veröffentlichungsnummer:
**WO 2009/133115 (05.11.2009 Gazette 2009/45)**

(54) **HOCHLEISTUNGSDREHDURCHFÜHRUNG**

HIGH-PERFORMANCE ROTARY FEEDTHROUGH

PASSAGE TOURNANT DE GRANDE CAPACITÉ

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **02.05.2008   DE 102008021936**

(43) Veröffentlichungstag der Anmeldung:
**09.02.2011   Patentblatt 2011/06**

(73) Patentinhaber: **GAT Gesellschaft für Antriebstechnik mbH**
**65366 Geisenheim (DE)**

(72) Erfinder:
• **OTT, Stephan**
**65201 Wiesbaden (DE)**
• **HOFF, Dennis**
**55124 Mainz (DE)**

(74) Vertreter: **WSL Patentanwälte Partnerschaftsgesellschaft**
**Kaiser-Friedrich-Ring 98**
**65185 Wiesbaden (DE)**

(56) Entgegenhaltungen:
EP-A1- 1 526 316     EP-A1- 1 630 347
EP-A2- 1 724 502     DE-A1- 10 135 533

EP 2 281 135 B1

**Beschreibung**

Die vorliegende Erfindung betrifft eine Drehdurchführung für eine axiale Überleitung von unter hohem Druck stehenden Fluiden von einem stehenden in ein drehendes Maschinenteil, mit einem stationären Gehäuse, welches eine axiale Durchtrittsöffnung aufweist, und eine axiale Führung für einen ersten hohlen Kolben bildet, wobei der Kolben axial verschiebbar aber abgedichtet in bzw. auf der Führung des stationären Gehäuses aufgenommen ist und an einem dem drehenden Maschinenteil zugewandten Ende einen ersten Gleitdichtring aufweist, der seinerseits abgedichtet an dem Kolben befestigt ist und eine ebene Gleitdichtfläche für den dichtenden Gleitkontakt mit der ebenen Gleitdichtfläche eines zweiten, dem ersten gegenüberliegenden Gleitdichtringes aufweist, der an dem drehenden Maschinenteil abgedichtet und mit diesem drehbar befestigt ist, und wobei der erste Kolben mit dem ersten Gleitdichtring in Richtung des zweiten Gleitdichtringes federnd vorgespannt ist, wobei auch der zweite Gleitdichtring an einem axial beweglichen, zweiten hohlen Kolben vorgesehen ist, der in bzw. auf einer Führung an dem drehenden Maschinenteil axial verschiebbar und abgedichtet aufgenommen ist, wobei der zweite Kolben mit der zweiten Gleitringdichtung in Richtung der ersten Gleitringdichtung federnd vorgespannt ist.

Eine entsprechende, axiale Drehdurchführung mit Gleitringdichtung ist aus dem Stand der Technik gemäß DE 101 35 533 bekannt.

Weitere Drehdurchführungen mit Gleitringdichtungen sind bekannt aus der EP 1 724 502 A2, der EP 1 630 347 A1 und der EP 1 526 316 A1.

Drehdurchführungen und ihre entsprechende Gleitringdichtungen haben sich in zahlreichen und teilweise sehr verschiedenen Anwendungen bewährt. Die freien Durchflussquerschnitte der Gleitdichtringe reichen dabei von wenigen Quadratmillimetern (Durchmesser der Gleitdichtringe z. B. 3 - 5 mm) bis hin zu Gleitringdurchmessern von einem Meter oder mehr. Die Drücke, unter welchen entsprechende Fluide (zumeist Flüssigkeiten) durch die Drehdurchführungen hindurch geführt werden, liegen im Bereich von normalem Umgebungsdruck oder sogar darunter im Vakuumbereich, bis hin zu Drücken von mehreren hundert Bar (1 Bar = 0,1 Megapascal - MPa).

Von Hochleistungsdrehdurchführungen spricht man zumeist dann, wenn die Drücke, unter welchen Fluid durch die Drehdurchführung übertragen werden muß, in einem Bereich oberhalb von 10 MPa liegen und/oder die Drehzahlen des drehenden Maschinenteils sehr hoch sind bzw. die Relativgeschwindigkeiten der aufeinander gleitenden Gleitdichtflächen sehr groß werden (größer als 5 m/s) und/oder die Durchmesser der Gleitdichtringe sehr groß sind. Auch wenn die Drehdurchführung für das Hindurchleiten besonders abrasiver Medien ausgelegt ist, wird die Drehdurchführung im Sinne der vorliegenden Erfindung als Hochleistungsdrehdurchführung angesehen.

Dabei ist klar, daß je nach der konkreten Geometrie der Drehdurchführung ein unter sehr hohem Druck stehendes Fluid die unter federnder Vorspannung aneinanderliegenden Gleitdichtflächen tendenziell auseinander drücken und in geringer Menge zwischen diesen Flächen entweichen kann. Ein Leck im Sinne von nennenswerten Mengen (von z. B. 0,1 bis 1 Liter pro Minute) sollte dabei allerdings vermieden werden. Vielmehr ist bei der derartigen Drehdurchführung zumindest im Hochleistungsbereich erwünscht, dass das durch die Drehdurchführung hindurchgeführte Fluid gerade in einer solchen geringen Menge zwischen die Gleitdichtflächen eindringt, dass es vor allem schmierende und eventuell auch kühlende Eigenschaften für die Gleitdichtflächen hat, so daß diese sich aufgrund der unvermeidlichen, bauartbedingten Reibung weniger stark erhitzen und auch weniger schnell verschleißen.

Es ist klar, daß dass nicht vollständig zu vermeidende Leck so klein wie möglich gehalten werden sollte, was man dadurch erreicht, daß die Gleitdichtflächen durch eine federnde Vorspannung und, abhängig von der konkreten Geometrie des beweglichen Kolbens, der eine Gleitdichtfläche trägt, gegebenenfalls auch durch den Druck, unter welchem das Fluid in der Drehdurchführung steht, aneinander gepreßt werden. Im Allgemeinen liefert der Druck des Fluids den größeren Teil der Anpresskraft der Gleitdichtflächen. Darüber hinaus hängt dese Anpresskraft selbstverständlich auch von der Tiefe des Dichtspaltes (der Differenz zwischen Außen- und Innenradius der Gleitdichtflächen), der Länge des Dichtspaltes, d. h. dem Gesamtumfang der Gleitdichtung (und damit dem absoluten Durchmesser der Gleitdichtringe) und auch von den rheologischen Eigenschaften bzw. der Fließfähigkeit und Viskosität des betreffenden Fluids ab.

Bei hohen Drücken ist auch die innere Geometrie der Drehdurchführung, d.h. des Kolbens und der Gleitdichtringe, von erheblicher Bedeutung, da je nach geometrischer Auslegung dieser Bauteile der innere Druck des Fluids die Gleitdichtflächen noch stärker aneinander pressen oder aber entlasten kann, wobei im allgemeinen eine Geometrie angestrebt wird, durch welche die Kraft, mit welcher die Gleitdichtflächen aufgrund des Innendruckes des übertragenen Fluids aneinander gedrückt werden, im allgemeinen nur einen vergleichsweise geringen Beitrag liefert. Diese Eigenschaft wird auch mit dem Begriff "hydrostatische Kompensation" bezeichnet und wird später noch genauer erläutert.

Es versteht sich, daß die vorstehend beschriebenen Drehdurchführungen je nach den vorstehend erläuterten Parametern einem sehr starken Verschleiß ausgesetzt sein können. Insbesondere für Hochleistungsdrehdurchführungen, durch welche Fluid unter hohem Druck (mit entsprechend großen Anpresskräften der Gleitdichtflächen) und/oder bei hohen Relativgeschwindigkeiten der Gleitdichtflächen hindurchgeführt werden muß, beträgt die ununterbrochene Lebensdauer entsprechender Gleitdichtringe oft nur wenige Stunden oder Tage. Der Austausch entsprechender Gleitdichtringe bedeutet dann notwendigerweise einen entsprechenden Maschinenstillstand und erfordert Arbeitskraft.

Gegenüber diesem Stand der Technik liegt der vorliegenden Erfindung die Aufgabe zugrunde, eine Drehdurchführung der eingangs genannten Art, die in der Weise ausgestaltet ist, daß auch bei hohen Drücken und/oder hohen Relativgeschwindigkeiten der Gleitdichtflächen die ununterbrochene Lebensdauer entsprechender Gleitdichtringe verlängert und der mit der regelmäßigen Wartung bzw. dem Austausch der Gleitdichtringe verbundene Aufwand minimiert werden.

Diese Aufgabe wird gemäß der vorliegenden Erfindung dadurch gelöst, dass der erste und der zweite Gleitdichtring jeweils von dem zugehörigen Kolben abnehmbar und austauschbar ist und dass für den Austausch der Gleitdichtringe eine Einrichtung zum Begrenzen der maximal ausgefahrenen Position des Kolbens vorgesehen ist, welche einen Endanschlag für den Kolben entgegen der federnden Vorspannkraft des Kolbens bildet.

Gemäß der Erfindung ist jeweils eine Einrichtung zum axialen Fixieren des Kolbens vorgesehen, welche einen Anschlag für den Kolben entgegen der auf den Kolben wirkenden federnden Vorspannkraft bildet. Beispielsweise kann ein im Inneren des Gehäuses bzw. im Inneren der Führung liegendes Ende des Kolbens mit einem von der Kolbenoberfläche vorstehenden Sprengring versehen sein, welcher mit einer Stirnseite der Führung bzw. eines Führungsabschnittes des Gehäuses in Eingriff tritt und damit eine maximal ausgefahrene Stellung des Kolbens definiert. Ohne gegenüberliegende Gleitdichtfläche wird dann der Kolben durch die Vorspannfeder in eine Position gedrückt, in welcher der Sprengring an der entsprechenden Anschlagfläche anliegt. Dieser Sprengring hält dann den Kolben beim Zusammenbau der Drehdurchführung in seinem Gehäuse und sichert ihn gegen Herausrutschen. Im Betrieb der Drehdurchführung sollte jedoch ein entsprechender Sprengring oder Endanschlag des Kolbens einen gewissen Abstand bzw. ein gewisses Spiel gegenüber der zugehörigen Anschlagsfläche haben, und zwar bei beiden Kolben der Drehdurchführung, weil nur dann eine entsprechende Beweglichkeit beider Kolben gewährleistet ist, die bei der Relativdrehung etwaige Toleranzen bzw. Ungleichmäßigkeiten oder Taumelbewegungen in der Lage und Orientierung der Achsen ausgleichen können.

Darüber hinaus kann ein entsprechender Anschlag für Zwecke der Montage und insbesondere für einen Austausch der Gleitdichtringe auch so vorgesehen sein, daß die maximal ausgefahrene Position des Kolbens variabel einstellbar ist. Eine solche Einrichtung kann selbstverständlich auch unabhängig von und zusätzlich zu dem eben beschriebenen Endanschlag in Form eines Sprengringes vorgesehen sein.

Eine solche Einrichtung ist zweckmäßig für einen schnellen und einfachen Wechsel bzw. Ein- und Ausbau der Drehdurchführung und/oder der Gleitdichtringe, weil damit der Kolben in einer Position gehalten werden kann, in welcher die beiden gegenüberliegenden Gleitdichtflächen einen hinreichenden Abstand voneinander haben, so daß der Haltering vom Kolben gelöst und zusammen mit dem Gleitdichtring abgenommen und beispielsweise gegen einen Haltering mit einem neuen Gleitdichtring ausgetauscht werden kann. Insbesondere bei Drehdurchführungen mit großem Durchmesser, zum Beispiel im Bereich von 50 oder 100 mm oder darüber, bei welchen zur Erzeugung der erforderlichen Vorspannung relativ starke Vorspannfedern verwendet werden, ist eine solche Einrichtung hilfreich und zweckmäßig. Gemäß einer Ausführungsform ist dabei ein axialer Anschlagpunkt einstellbar, was bedeutet, daß man den jeweils erforderlichen Abstand zwischen den gegenüberliegenden Gleitdichtflächen, wie er für einen einfachen Einbau und Ausbau bzw. Wechsel eines Gleitdichtrings benötigt wird, innerhalb gewisser Grenzen nach Belieben einstellen kann.

Eine solche Einrichtung kann bei einer anderen Ausführungsform beispielsweise auch aus einem oder mehreren Bolzen bestehen, der (die außerhalb des jeweiligen Kolbens an dem stehenden bzw. an dem drehenden Maschinenteil befestigt sit (sind), sich axial parallel zu dem Kolben erstreckt und eine Bohrung an einem radial nach außen ragenden Ansatz des Kolbens durchgreift. Das freie Ende eines solchen Bolzens könnte dann z. B. ein Gewinde aufweisen, auf welches eine Mutter aufgeschraubt wird, die an dem nach außen ragenden Ansatz des Kolbens anliegt und diesen auch auf diese Weise festhält. Grundsätzlich sind aber auch andere Einrichtungen, wie z. B. Halteklammern und dergleichen denkbar, welche eine axiale Position des Kolbens relativ zu dem jeweiligen Schienenteil gegen die Vorspannkraft begrenzen.

Bei einer Ausführungsform der Erfindung besteht die Einrichtung zum Einstellen einer axialen Anschlagposition des Kolbens aus einer spiralförmig um den Kolben umlaufenden Führungsbahn und einem mit dieser Führungsbahn zusammenwirkenden Führungsteil, welches beispielsweise an einem um den Kolben drehbaren Ring, jedoch in einer axial festgelegten Position um den Kolben herum drehbar ist. Das Führungsteil tritt dann nach Art eines Nockens oder Nockenfolgers in Eingriff mit der Führungsbahn und zieht dadurch, ausgehend von einer maximal ausgefahrenen Position des Kolbens, durch den Eingriff mit axial näher zur Gleitdichtrichtung hin liegenden Abschnitten der Führungsbahn den Kolben in die Führung des Gehäuses hinein. Auf diese Weise können die Gleitdichtflächen auseinanderbewegt werden, wobei es im allgemeinen ausreicht, wenn einer der beiden Kolben der Drehdurchführung eine entsprechende Einrichtung zum variablen Einstellen einer maximalen Ausfahrposition des Kolbens hat, während der andere Kolben dann mit einem starren Anschlag auskommt. Die spiralförmige Führungsbahn kann zum Beispiel unter einem Winkel von 5 bis 20° zur Umfangsrichtung (entsprechend 70 bis 85° zur Achse der Drehdurchführung) verlaufen und es reicht im allgemeinen aus, wenn sie sich nur um einen Teil des Umfangs des entsprechenden Kolbens erstreckt. Um eine Verkanten und eine einseitige Krafteinwirkung zu vermeiden, sollten mindestens zwei diametral gegenüberliegende Bolzen (oder mehr entsprechend symmetrisch um den Umfang verteilte Bolzen) vorgesehen sein, die in eine oder mehrere geneigte Führungsbahnen eingreifen.

Im übrigen sind auch das Führungsteil und die Führungsbahn so bemessen, daß sie in eine relative Position drehbar sind, in welcher sie nicht unmittelbar in Eingriff stehen, sondern ein wechselseitiges Spiel aufweisen, wenn die Drehdurchführung im Betrieb ist und die beiden Gleitdichtflächen in Eingriff miteinander stehen, wobei auch die Endanschläge einen kleinen Abstand bzw. ein kleines Spiel gegenüber den zugehörigen Anschlagflächen (zwischen Sprengring und Anschlagfläche) aufweisen. Die Bolzen stehen also im Betrieb der Drehdurchführung nicht in Eingriff mit der Führungsbahn, sondern sind in einer entsprechenden Endposition in der Führungsbahn mit ausreichend Spiel aufgenommen, wenn die Gleitdichtflächen miteinander in Kontakt sind und durch die Vorspannfedern und/oder den Fluiddruck im Inneren der Drehdurchführung aneinander gepresst werden. Die entsprechenden axialen Anschläge, die gegen die Kraft der jeweiligen Vorspannfeder den Kolben in einer durch die Anschläge vorgegebene maximal ausgefahrenen Position halten, sind also während des regulären Betriebs der Drehdurchführung außer Eingriff und kommen allenfalls bei ungewöhnlichen Betriebszuständen oder aber bei Stillstand der Drehdurchführung und bei einem Wechsel bzw. Austausch der Gleitdichtringe miteinander in Eingriff.

Bei praktisch allen Maschinen, die sowohl stationäre, d.h. feststehende, und hierzu relativ drehende bzw. drehbare Maschinenteile aufweisen, ist es unvermeidlich, daß das drehende Maschinenteil relativ zum stehenden Maschinenteil nicht in einem mathematisch exakten Sinne um einen relativ zum stehenden Maschinenteil exakt positionierte Achse rotiert, sondern es ist vielmehr unvermeidlich, daß aufgrund von gewissen Fertigungstoleranzen, Unwuchten, Vibrationen und/oder äußeren Einwirkungen, wie z. B. auch Bewegungen oder Erschütterungen des stehenden Maschinenteils, mehr oder weniger stark ausgeprägte exzentrische oder taumelnde Bewegungen des drehenden relativ zu dem stehenden Maschinenteil auftreten. Auch wenn diese Abweichungen von einer exakt Rotationsbewegung äußerst gering und beispielsweise nur im Bereich von hunderstel Millimetern liegen mögen, wirken sie sich dennoch beträchtlich auf die Wirkungsweise und den Verschleiß der Gleitdichtflächen auf, die für eine fehlerfreie Funktion exakt ebene Gleitdichtflächen aufweisen müssen und auch so geführt und gehalten werden sollten, daß unter beliebigen Winkelpositionen bezüglich der Drehachse die Gleitdichtflächen entlang ihrer gesamten Umfangserstreckung in der gleichen Ebene liegen und überall mit dem gleichen Anpreßdruck beaufschlagt werden, und dass überall die gleiche Spaltbreite des Dichtungsspaltes (die sich aufgrund des hindurchtretenden Fluids einstellt) vorliegt. Da auch diese Spaltbreiten im Bereich von einem Zehntel Millimeter und weniger liegen, sind Taumelbewegungen und eine Verkippung des drehenden relativ zum stehenden Maschinenteil, die in derselben Größenordnung liegen, selbstverständlich nicht vernachlässigbar und haben erhebliche Auswirkungen. Der in der Führung axial verschiebbar und abgedichtet aufgenommene erste Kolben kann zwar derartige Abweichungen, die aufgrund von Unwuchten und Deviationsmomenten auftreten, teilweise kompensieren, jedoch reicht die Kompensationsfähigkeit der herkömmlichen Dichtungen oft nicht aus, um die Verschleißanfälligkeit der oben beschriebenen, herkömmlichen Drehdurchführungen mit Gleitdichtringen entscheidend zu reduzieren.

Gemäß der Erfindung sind jedoch beide Gleitdichtringe jeweils an einem axial beweglichen Kolben aufgenommen und beide Kolben tragen zu einer Kompensation der Abweichungen von der idealen Rotationsbewegung bei. Die entsprechenden Kolben sind typischerweise Hohlzylinder, die beispielsweise auf ihrer Außenseite eine oder mehrere umlaufende Nuten zur Aufnahme eines elastischen Dichtungsrings aufweisen können, wobei der Kolben in eine entsprechende, zylindrische Führung eingeschoben wird, deren Durchmesser geringfügig größer ist als die des Kolbens, wobei allerdings die an der Außenseite des Kolbens vorgesehenen Dichtungsringe über die zylindrische Außenfläche des Kolbens hervorstehen und unter einem gewissen Anpreßdruck an der Innenseite der entsprechenden Führungsfläche anliegen. Der Kolben wird deshalb mit einem gewissen radialen Spiel, welches durch elastische Dichtungsringe überbrückt wird, in der entsprechenden Führung aufgenommen und kann aufgrund dieses relativen kleinen Spiels etwas verkippt werden. Gleichzeitig sorgt die federnde Vorspannung dafür, daß die Gleitdichtringe im wesentlichen entlang ihres gesamten Umfangs lokal mit der gleichen Kraft und damit auch mit dem gleichen Druck aneinander gepreßt werden. Der Dichtring oder Dichtringe zwischen Kolben und einer Kolbenführung können selbstverständlich auch in einer Aussparung der Führungsfläche aufgenommen sein, welche den Kolben bzw. dessen Außenfläche umfaßt.

Etwaige Taumelbewegungen oder Abweichungen des drehenden Maschinenteils von einer idealen und exakten Rotation können auf diese Weise durch geringfügiges Verkippen der Achsen der beiden begrenzt beweglich gelagerten Kolben gegenüber den übrigen stationären bzw. drehenden Teilen der Drehdurchführung ausgeglichen werden. Die begrenzte Beweglichkeit der Kolben ergibt sich dabei nicht nur aus der axial verschiebbaren Lagerung, sondern auch aus dem geringen radialen Spiel zwischen Kolben und Kolbenführung in bzw. an dem jeweiligen Gehäuse.

Es versteht sich, daß dieses Prinzip auch dann realisierbar ist, wenn der Kolben eine entsprechende hohle Führung auf der Außenseite umfaßt, wobei es außerdem nicht zwingend, aber herstellungstechnisch wesentlich einfacher ist, wenn die betreffenden Führungsflächen und Kolbenflächen Zylinderoberflächen sind.

Gemäß einer Ausführungsform ist vorgesehen, daß die Führung mindestens eines der Kolben diesen auf seiner Außenseite umfaßt.

Der Kolben hat dementsprechend eine (im allgemeinen zylindrische) Außenfläche und wird in einer entsprechenden (zylindrischen) Innenfläche einer Führung geführt, die einen nur geringfügig größeren Durchmesser hat als die Außenfläche des Kolbens, wobei verbleibende Führungsspalt durch elastische Dichtungen, wie z. B. O-Ringe oder Lippenringdichtungen, abgedichtet und verschlossen ist.

Wie bereits erwähnt, könnte die Rolle von Führung und Kolben auch vertauscht werden, d.h. der Kolben könnte auch auf der Außenseite eines zylindrischen Hohlzapfens geführt sein, der sich von dem stehenden bzw. drehenden Maschinenteil in Richtung des jeweils anderen erstreckt. Im Sinne der vorliegenden Erfindung werden also das gegenüber dem stationären Maschinenteil axial bewegliche Teil, welches den Gleitdichtring trägt, und das entsprechende Gegenstück am drehenden Maschinenteil jeweils als "Kolben" bezeichnet, unabhängig davon, ob es sich dabei entsprechend dem üblichen Sprachgebrauch um ein im Inneren eines anderen Teiles oder außen auf einem anderen Teil geführtes Teil handelt.

Gemäß einer Ausführungsform der Erfindung ist außerdem vorgesehen, daß jeder der Gleitringe von einem an dem ersten bzw. an dem zweiten Kolben befestigbaren Haltering umfaßt und mit diesem fest verbunden ist. Die Gleitdichtringe sind, wie der Name schon sagt, ringförmige Elemente mit einer ebenen Gleitfläche und sie haben typischerweise einen rechteckigen Querschnitt, auch wenn es auf den genauen Querschnitt eines solchen Gleitrings nicht ankommt. Die Querschnittform könnte beispielsweise auch trapezförmig sein oder der Gleitdichtring könnte auf seiner Außenseite einen oder mehrere Vorsprünge oder einen umlaufenden Vorsprung aufweisen, um mit dem Haltering in einen festen, formschlüssigen Eingriff gebracht zu werden. Auch auf seiner der Gleitdichtfläche gegenüberliegenden Seite sollte der Gleitdichtring vorzugsweise eine ebene Fläche aufweisen, die mit einer stationären Dichtung, z. B. einem O-Ring, in Dichtungseingriff treten kann, der an einer entsprechenden Stirnfläche oder einer ebenen Schulterfläche des Kolben angeordnet ist.

Es versteht sich, daß die eine Gleitdichtfläche des Gleitdichtrings in axialer Richtung, d.h. in Richtung auf den jeweils gegenüberliegenden Gleitdichtring etwas hervorsteht, damit die beiden Halteringe, welche jeweils einen Gleitdichtring tragen, nicht ihrerseits miteinander in Gleit- bzw. Reibungskontakt kommen.

Wie bereits erwähnt, können die Gleitdichtringe aus einem keramischen Material bestehen oder sie können auch aus einem Metall bestehen, wobei sie in beiden Fällen auch insbesondere mit einer Hartmetallbeschichtung, wie z. B. Wolframcarbid, versehen sein können. Dabei reicht es aus, wenn eine entsprechende Beschichtung im wesentlichen auf die Gleitdichtfläche beschränkt ist und nur eine geringe Dicke in der Größenordnung von 100 $\mu$ (z. B. 50 bis 200 $\mu$) hat. Auch andere Oberflächenbehandlungen, wie z. B. Nitrieren durch PVD-Behandlung, können gemäß einer Ausführungsform an den Dichtringen bzw. den Gleitdichtflächen der Dichtringe durchgeführt werden. Alternativ könnten die Gleitdichtringe auch aus massivem Hartmetall hergestellt sein. Hartmetall zeichnet sich dabei nicht nur durch seine besondere Härte und Widerstandsfähigkeit gegen Abrieb und abrasive Medien, sondern auch durch eine besondere Hochtemperaturbeständigkeit aus.

Zweckmäßig ist es außerdem, wenn wenigstens einer der beiden Halteringe und selbstverständlich am besten beide Halteringe, jeweils mit einer Schnellkupplung an den zugehörigen Kolben befestigbar sind. Dies beschleunigt den Austausch und Wechsel entsprechender verschlissener Gleitdichtringe, die zweckmäßigerweise gemeinsam mit einem jeweils zugehörigen Haltering ausgetauscht werden.

Dabei ist gemäß einer Ausführungsform eine solche Schnellkupplung ein Bajonettverschluß, d.h. der Haltering und der Kolben weisen wechselseitig Vorsprünge und hinterschnittene Aussparungen auf, die durch axiales Ineingriffbringen und Verdrehen eine feste, kraft- und formschlüssige Verbindung zwischen Haltering und Kolben herstellen, wobei gleichzeitig der Dichtring an die stationäre Dichtung zwischen Kolben und Gleitdichtring angepreßt wird.

Analog zu einem Gehäuse am stehenden Maschinenteil kann auch an dem drehenden Maschinenteil ein abnehmbar und abgedichtet befestigbares Gehäuse vorgesehen sein, welches eine axiale Durchtrittsöffnung aufweist und eine axiale Führung für den zweiten hohlen Kolben bildet. Die gesamte Drehdurchführung besteht dann aus zwei Gehäusen, von denen eines am drehenden und eines am stehenden Maschinenteil angeordnet ist, wobei diese beiden Gehäuse jeweils eine Führung für je einen axial relativ zu dem Gehäuse verschiebbaren Kolben aufweist, der abgedichtet in dem Gehäuse geführt wird, und jeder Kolben einen Gleitdichtring trägt, vorzugsweise mit Hilfe eines zusätzlichen Halterings, über welchen der Gleitdichtring an dem Kolben befestigt ist. Die beiden am stehenden Teil und am drehenden Teil der entsprechenden Maschinen oder Einrichtung befestigten Teile der Drehdurchführung sind dann strukturell miteinander identisch.

Gemäß einer Ausführungsform der Erfindung ist vorgesehen, daß die ersten und zweiten Gleitringe und vorzugsweise auch die entsprechenden Halteringe jeweils nicht nur strukturell, sondern in allen Abmessungen und sonstigen Details miteinander identisch ausgebildet sind. Dies bedeutet, daß es nur einen einzigen Typ von Halteringen und Gleitdichtringen gibt und daß die Einheit aus Haltering und Gleitdichtring jeweils beliebig entweder am stehenden und/oder am drehenden Maschinenteil ausgetauscht werden kann. Dies erleichtert und vereinfacht vor allem die Lagerhaltung entsprechender Ersatzteile.

In einer Ausführungsform der Erfindung sind auch die Kolben miteinander identisch ausgebildet, d.h. auch die Kolben könnten zwischen drehendem und stehendem Maschinenteil beliebig ausgetauscht werden.

Schließlich können gemäß einer Ausführungsform der Erfindung unabhängig von Kolben und Gleitdichtringen oder auch zusätzlich zu diesen die jeweiligen Gehäuse miteinander identisch ausgebildet sein, so daß die gesamte Drehdurchführung symmetrisch ausgebildet ist und in jeder beliebigen der zwei prinzipiell möglichen Orientierungen an dem stehenden und dem drehenden Maschinenteil montiert werden kann.

Schließlich ist gemäß einer Ausführungsform vorgesehen, daß die Kolben mit den daran befestigen Gleitdichtringen zu mindestens 90 % hydrostatisch kompensiert sind.

Bei der Auslegung entsprechender Kolben und Gleitdichtringe geht man davon aus, daß aufgrund des Lecks und wegen des durch den Dichtungsspalt austretenden Fluids von der Innenseite der Dichtung bis hin zur Außenseite, d. h. entlang der radialen Ausdehnung des Dichtungsspaltes der Druck von dem im Inneren der Drehdurchführung vorherrschenden, größeren Wert auf den kleineren Umgebungsdruck linear abnimmt. Die Kraft aufgrund des Drucks der Leckflüssigkeit, die in Richtung einer Vergrößerung des Leckspaltes wirkt, ergibt sich demnach aus dem Integral des vom Radius abhängigen Druckes, multipliziert mit dem jeweils (infinitesimalen) Ringflächenabschnitt: $\int p(r)2\pi r dr$, in den Grenzen zwischen Innen- und Außenradius der Gleitdichtflächen (p(r) = radiusabhängiger Druck; r = Radius, dr = Differential des Radius), während die in die entgegensetzte Richtung wirkende Druckkraft, die auf den Kolben wirkt, sich aus dem Produkt des Druckes im Inneren der Drehdurchführung multipliziert mit der Stirnfläche des Kolbens ergibt, welche der Dichtungsfläche entgegenliegt. Da auf die in dem Dichtspalt vorliegende Fläche im Mittel ein kleinerer Druck wirkt, muß also für ein Gleichgewicht dieser Kräfte die Größe der Dichtungsfläche im Verhältnis zu der entgegengesetzt liegenden Stirnfläche des Kolbens so gewählt werden, daß diese beiden Druckkräfte sich in etwa ausgleichen, wenn man eine sogenannte hydrostatische Kompensation erreichen möchte. Durch entsprechende Variation des Verhältnisses der beiden genannten Flächen (Stirnfläche des Kolbens und entgegensetzt liegende Dichtungsfläche), kann man ggf. erreichen, daß sich mit wachsendem Innendruck in der Drehdurchführung entweder der Anpreßdruck der Gleitdichtflächen noch verstärkt oder aber etwas abnimmt. Letzteres hätte eine Vergrößerung des Lecks bei Reduzierung des Verschleißes zur Folge, während im ersteren Fall das Leck nicht oder nur weniger stark anwachsen würde, dafür aber der Verschleiß der Dichtungsflächen zunimmt. Entsprechend liegt dann die hydrostatische Kompensation über 100% (bei einer druckinduzierten Anpresskraftverminderung) oder unter 100% (bei einer druckinduzierten Erhöhung der Anpresskraft der Dichtflächen). Ohne dass die Erfindung auf konkrete Radien bzw. relative Radien der Gleitdichtflächen und der gegenüberliegenden Kolbenflächen festgelegt werden soll, hat die Anmelderin festgestellt, daß sich der Außenradius $r_0$ des Kolbens (unter der Annahme, dass sein Innenradius $r_1$ mit dem der Gleitdichtflächen übereinstimmt) und bei einem Außenradius $r_2$ der Gleitdichtflächen für den Fall einer 100%igen hydrostatischen Kompensation aus der Gleichung

$$r_0^2 = 1/3 (r_1^2 + r_2^2 + r_1 r_2)$$

ergibt. Gemäß der vorliegenden Erfindung wird eine etwas weniger als 100%-ige, z. B. 95% bis 99%-ige hydrostatische Kompensierung angestrebt, d.h. mit steigendem Druck nimmt der Anpreßdruck der Dichtungsflächen um einen Betrag zu, der zwischen 0 und 5 % des Wertes liegt, den man ohne jede hydrostatische Kompensierung hätte. Für den Außenradius der inneren Stirnfläche des Kolbens (oder äquivalenter Flächen, die einem in Richtung der Gleitringdichtung wirkenden Druck ausgesetzt sind) bedeutet dies, dass er etwas größer ist als der Radius $r_o$, der sich aus der obigen Gleichung ergibt.

Weitere Vorteile, Merkmale und Anwendungsmöglichkeiten der vorliegenden Erfindung werden deutlich anhand der folgenden Beschreibung einer bevorzugten Ausführungsform und der dazugehörigen Figuren. Es zeigen:

| | |
|---|---|
| Figur 1 | eine Ausführungsform einer erfindungsgemäßen Drehdurchführung in einem ersten, geschlossenen Zustand, |
| Figur 2 | die in Figur 1 dargestellte Ausführungsform einer Drehdurchführung in einem geöffneten Zustand, |
| Figur 3 | eine axiale Schnittansicht einer weiteren Ausführungsform mit einem relativ zu Figur 1 und 2 verdrehten Kolben, |
| Figuren 3a und 3b | schematisch den Eingriff der Führungszapfen des Spannringes mit der Nut des Kolbens, und |
| Figur 4 | einen Schnitt entlang einer zur Achse senkrechten Ebene, die durch die Linie IV-IV in Figur 3 angezeigt wird. |

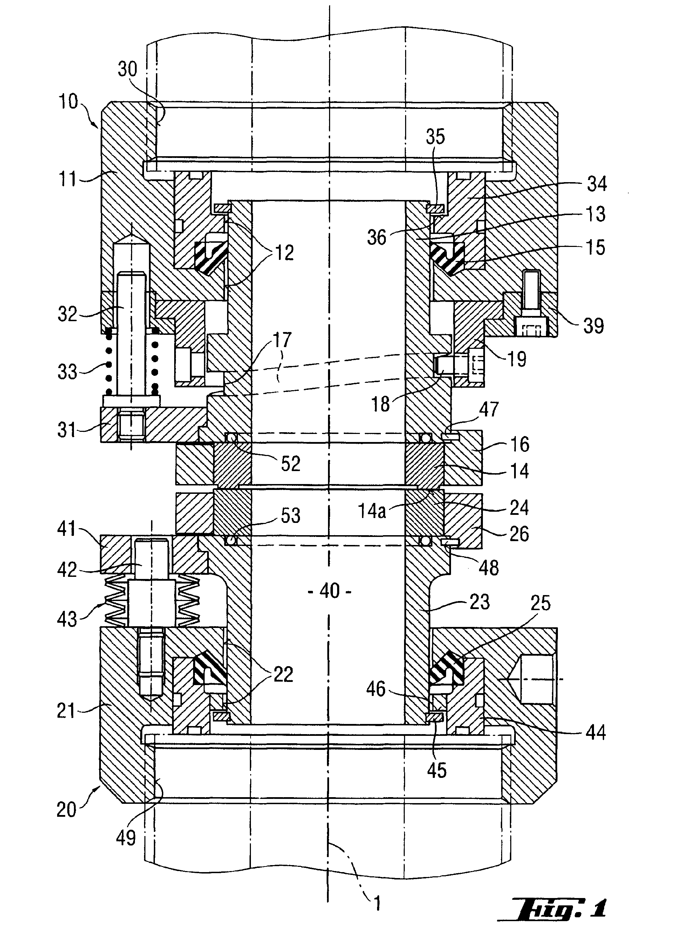

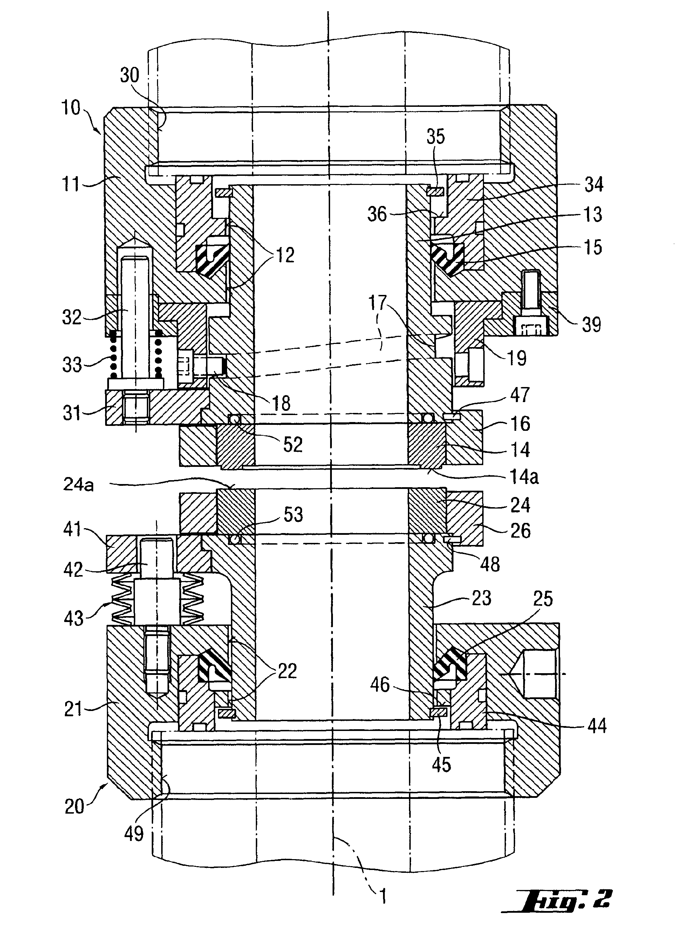

Man erkennt in den Figuren 1 und 2 jeweils ein stehendes Maschinenteil 10 und ein drehbares Maschinenteil 20, die nur über Gleitdichtringe 14, 24 miteinander in Eingriff bringbar sind und die jeweils Teil der Drehdurchführung sind. Das stehende Maschinenteil 10 (genauer gesagt: das stehende Teil der Drehdurchführung) besteht im wesentlichen aus einem Gehäuse 11 und einem darin abgedichtet geführten und axial verschiebbaren Kolben 13. Die Gehäuse 11, 21, welche Durchtrittsöffnungen 30, 49 aufweisen, können identisch miteinander sein und unterscheiden sich im wesentlichen nur dadurch, daß das eine Gehäuse 11 an einem feststehenden Teil bzw. Rohr oder Überführungsblock befestigt ist, während das Gehäuse 21 an einem um die Achse 1 drehbaren Teil befestigt ist. Die Innenfläche des Gehäuses 11 weist an einem äußeren Kolbenquerschnitt eine Führungsfläche oder Führung 12 auf. Dieser Querschnitt kann im Prinzip beliebig sein, ist jedoch aus Gründen der einfachen Herstellung im allgemeinen kreisförmig, d.h. in der Führung 12 führt der Abschnitt des Kolbens 13 ist ein Hohlzylinder, dessen Außendurchmesser etwas geringer ist als der Innendurchmesser in der hohlzylindrischen Führung 12.

Es versteht sich, daß die Rolle von Kolben und Führung auch vertauscht werden könnte, indem die Führung als axial vorstehender Hohlzapfen ausgebildet wird und dieser Hohlzapfen von einem ebenfalls hohlen, axial verschiebbaren Kolben umfaßt wird.

Die Führung 12 ist geteilt, und besteht in ihrem unteren Teil aus einem inneren Abschnitt des Gehäuses 11 und in ihrem in den Figuren weiter oben liegenden Abschnitt des stehenden Maschinenteils 10 der Innenfläche eines Abschlußringes 34, wobei zwischen Abschlußring 34 und dem unteren Teil der Führung 12 eine umlaufende Aussparung gebildet wird, in welcher eine stationäre Dichtung 15 aufgenommen ist. Die Dichtung 15 steht mit der Außenfläche des Kolbens 13 in dichtendem Eingriff, wobei der Kolben in der Führung 12 und in dichtendem Eingriff mit der Dichtung 15 begrenzt axial verschiebbar ist. In der dargestellten, maximal ausgefahrenen Position tritt ein Sprengring 35, welcher in einer Nut am oberen Ende des Kolbens 13 aufgenommen ist, mit Anschlag 36 an dem Abschlußring 34 in Eingriff.

Es versteht sich, daß die Maße und Abstände des stehenden Maschinenteils 10 und des drehbaren Maschinenteils 20 so aufeinander abgestimmt sind, daß in der Eingriffsposition der beiden Gleitdichtringe 14, 24 der Sprengring 35 und der hierzu spiegelbildlich angeordnete Sprengring 45 am drehenden Maschinenteil bezüglich ihrer jeweiligen Anschläge an den Abschlußringen 34 bzw. 44 mindestens noch ein kleines axiales Spiel aufweisen, d.h. nicht beide gleichzeitig an dem Anschlag 36 bzw. dem analogen Anschlag 46 anliegen, damit die beiden Gleitdichtringe 14, 24 in dichtendem Gleitkontakt miteinander sind und der entsprechende Kontaktdruck durch die Schraubenfeder 33 bzw. ein entsprechendes Federpaket 43 am drehenden Maschinenteil aufrechterhalten wird.

Wie man außerdem erkennt, ist der Kolben 13 in seinem aus der Führung 12 herausragenden Abschnitt radial erweitert und bildet so einen Anschlag für eine maximal in das Gehäuse bzw. die Führung 12 b zw. 22 eingefahrene Position, sofern nicht ohnehin die Federn 33, 43 den axialen Einschub des Kolbens in die Führung bzw. das Gehäuse begrenzen.

Der Kolben 13 weist außerdem noch einen radialen Ausleger 31 auf, der wiederum eine achsparallele Bohrung hat, in welche ein Mitnehmerstift 32 eingreift, der mit seinem anderen Ende in einer axialen Bohrung in dem Gehäuse 11 aufgenommen ist, wobei dieser Mitnehmerstift 32 in eine der beiden Bohrungen fest eingeschraubt sein kann und in die andere Bohrung jeweils passend eingreift, so daß er eine Relativdrehung zwischen dem Kolben 13 und dem zugehörigen Gehäuse 11 verhindert. In der dargestellten Ausführungsform ist auch jeweils eine Feder 33 bzw. 43 um den Mitnehmerstift 32 bzw. den analogen Mitnehmerstift 42 herum angeordnet und wird auf diese Weise zwischen dem Ausleger 31 und dem Gehäuse 11 bzw. einem Haltering 39 gehalten. Es versteht sich, daß um den Umfang der stehenden bzw. drehbaren Maschinenteile 10 bzw. 20 entsprechende Ausleger 31, 41 und Mitnehmer 32, 42 um den Umfang verteilt und im Fall des drehbaren Maschinenteils 20 möglichst auch symmetrisch verteilt angeordnet sein können, um zum einen die federnde Vorspannkraft durch die Federn 33 bzw. 43 gleichmäßig um den Umfang der Kolben 13, 23 zu verteilen und um außerdem eine Unwucht des drehbaren Maschinenteils 20 durch das Vorsehen des entsprechenden Ausiegers 41 und der Mitnehmerstifte 42 zu vermeiden. Die Federn 33 und 43 können insbesondere auch Gasdruckfedern sein.

Bezüglich der wesentlichen Elemente, wie sie vorstehend beschrieben wurden, sind das stehende Maschinenteil 10 und das drehbare Maschinenteil 20 in der hier gewählten axialen Schnittdarstellung symmetrisch aufgebaut und sie könnten gemäß einer Ausführungsform prinzipiell auch völlig identisch aufgebaut sein. Insbesondere könnte das Gehäuse 10 mit dem Gehäuse 20 identisch sein, ebenso wie auch die Abschlußringe 34, 44 und die entsprechenden Dichtungen 15, 25 identisch sein könnten. Auch die Kolben 13, 23 könnten prinzipiell identisch sein, unterscheiden sich jedoch im vorliegenden Fall aufgrund einer nachstehend noch zu beschreibenden Besonderheit der dargestellten Ausführungsform. Im übrigen sind auch die Halteringe 16 für die Gleitringe 14 bzw. 24 identisch und auch die Gleitdichtringe 14, 24 könnten prinzipiell identisch sein, auch wenn im vorliegenden Fall der Gleitdichtring 14 eine etwas vorspringende, verkleinerte Dichtfläche 14a zeigt. Dennoch sind die beiden Gleitdichtringe 14, 24 und auch die Halteringe 16, 26 unabhängig von der Ausbildung der Dichtflächen gegeneinander austauschbar. Die Dichtfläche 14a muß bei der dargestellten schmaleren Ausbildung im Vergleich zur gegenüberliegenden Dichtfläche des Gleitdichtringes 24 auch nicht exakt kreisringförmig sein , sondern kann in der Draufsicht eine leicht elliptische oder anderweitig von einer Kreisringform abweichende Form haben, solange nur die Dichtfläche 14a immer (vorzugsweise vollflächig) auf der gegenüberliegenden Fläche des Dichtringes 24 aufliegt.

Eine Besonderheit der dargestellten Ausführungsform liegt jedoch darin, daß sich einige Teile der Drehdurchführung, die an dem stehenden Maschinenteil 10 angeordnet sind, von den entsprechenden Teilen am drehenden Maschinenteil 20 unterscheiden.

Entsprechende Unterschiede findet man bei der konkreten Ausgestaltung des Kolbens 13 und in einem im Gegensatz zum drehenden Maschinenteil 20 zusätzlich an dem Gehäuse 11 vorgesehenen Spannring 19, der durch einen Haltering 39 um die Achse 1 drehbar gehalten wird und den Kolben 13 in seinem aus der Führung 12 in Richtung des gegenüberliegenden drehbaren Maschinenteils herausstehenden Abschnitt umfaßt. Der Kolben 13 weist in dem von dem Spannring 19 umfaßten Bereich eine Führungsbahn 17 in Form einer schraubenlinienförmig umlaufenden Nut auf, in die ein Führungsteil 18 in Form eines Zapfens eingreift, der an dem Spannring 19 fixiert ist.

Der Sinn und Zweck dieser Einrichtung, welche aus dem Spannring 19, dem Führungsteil bzw. -Zapfen 18 und der am Kolben 13 schraubenlinienförmig umlaufenden, als Führungsbahn dienenden Nut 17 besteht, wird deutlich anhand eines Vergleichs der Figuren 1 und 2, welche den Spannring 19 in zwei unterschiedlichen Positionen und die Gleitdichtringe 14, 24 einmal in Eingriff miteinander und einmal außer Eingriff miteinander zeigen.

Da der Spannring 19 um die Achse 1 drehbar ist und da die Führungsbahn bzw. Führungsnut 17 spiralförmig umläuft und der Führungszapfen 18 in diese Nut eingreift, tritt der Führungszapfen 18, auch wenn er in der in Figur 1 dargestellten Position in der Nut 17 mit beiderseitigem Spiel aufgenommen ist, nach einem kleinen Drehwinkel mit der oberen Seitenfläche der Nut 17 in Eingriff, und beim Weiterdrehen des Spannringes 19 in Richtung der in Figur 2 dargestellten Position wird durch den Eingriff zwischen Führungszapfen 18 und Nut 17 der Kolben 13 angehoben bzw. weiter in das Gehäuse 11 und die Führung 12 eingefahren. Tatsächlich sind dabei zwei diametral gegenüberliegende Führungszapfen 18 vorgesehen, auch wenn hier aus Gründen der Übersichtlichkeit nur ein Führungszapfen 18 dargestellt ist. Jeder Führungszapfen kann seine eigen Führungsbahn aufweisen, jedoch könnten die Führungszapfen auch axial so zueinander versetzt angeordnet sein, daß sie in derselben schraubenlinienförmigen Nut bzw. Führungsbahn laufen und gleichzeitig mit dieser in Eingriff treten können, wenn der Spannring 19 entsprechend gedreht wird, ohne dass der Kolben 13 dabei verkantet (bzw. die Kolbenachse verkippt). Wahlweise könnten auch drei Führungszapfen oder Bolzen unter 120° oder auch unter ungleichen Winkelabständen in Umfangsrichtung zueinander versetzt angeordnet sein und jeweils in eigenen Führungsbahnen oder in einer gemeinsamen Führungsbahn laufen, wobei nur darauf zu achten ist, daß die Führungsbahn(en) auf den Abschnitten, die durch Eingriff mit dem Führungszapfen einen entsprechenden Hub bewirken, jeweils die gleiche Steigung haben und alle Führungszapfen jeweils gleichzeitig mit der zugehörigen Führungsbahn in Eingriff kommen. Die Steigung sollte ausreichen, um über einen begrenzten Drehwinkel von weniger als 180° einen ausreichenden Hub und Abstand der Gleitdichtflächen für einen Wechsel der Gleitdichtringe zu bewirken. Gleichzeitig sollte aber die Steigung nicht zu groß sein, damit zwischen Führungsbahn und Führungsbolzen ein selbsthemmender Eingriff erfolgt.

Der gegenüberliegende Kolben 23 des drehbaren Maschinenteils wird zwar durch das entsprechende Federpaket 43 in Richtung des gegenüberliegenden Kolbens 13 vorgespannt und folgt deshalb anfänglich der Einfahrbewegung des Kolbens 13, jedoch sind die Abstände der Maschienenteile 10, 20 und das maximale Bewegungsspiel der Kolben 13, 23 so aufeinander abgestimmt, daß der Sprengring 45 des Kolbens 23 alsbald mit seinem entsprechenden Anschlag in Eingriff tritt, während der Kolben 23 durch den Spannring 19 in die in Figur 2 dargestellte Position angehoben bzw. verschoben wird, wobei der Sprengring 35 des Kolbens 13 mit dem entsprechenden Anschlag 36 außer Eingriff kommt. Der sich dabei einstellende Abstand zwischen den Gleitdichtringen 14 und 24 ist so bemessen, daß die Halteringe 16 bzw. 26 zusammen mit den daran befestigten Gleitringdichtungen 14 bzw. 24 von den zugehörigen Kolben 13, bzw. 23 gelöst und seitwärts, d.h. quer zur Achse 1, aus der Drehdurchführung entnommen und ausgetauscht werden können. In der bevorzugten Ausführungsform sind der Haltering 16 und der Haltering 26 jeweils über eine Bajonettkupplung 47, 48 mit ihrem zugehörigen Kolben 13 bzw. 23 verbunden, und die axiale Tiefe dieser Bajonettkupplung ist geringer als der lichte Abstand zwischen den Dichtflächen der Gleitdichtringe 14, 24 in der in Figur 2 dargestellten Montageposition.

Diese Ausgestaltung ermöglicht eine sehr schnelle und einfache Auswechslung verschlissener Gleitdichtringe 14, 24 gegen entsprechend neue Gleitdichtringe 14, 24, die am besten gemeinsam mit den zugehörigen Halteringen 16, 26 ausgetauscht werden, wobei es jedoch durchaus möglich ist, die Gleitdichtringe 14, 24 leicht lösbar in den Halteringen 16, 26 aufzunehmen. Dabei können die Dichtflächen 14a und/oder 24a verschmälert, wie im Falle der Dichtfläche 14a, oder auch in voller Breite entsprechend der radialen Dicke des jeweiligen Gleitdichtringes 14 bzw. 24 ausgebildet sein.

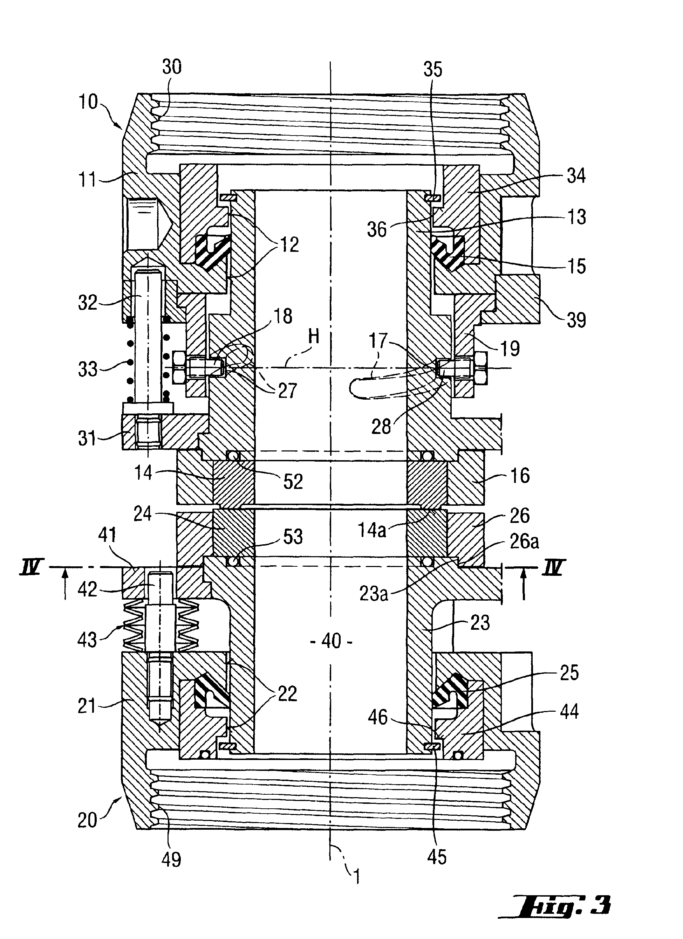

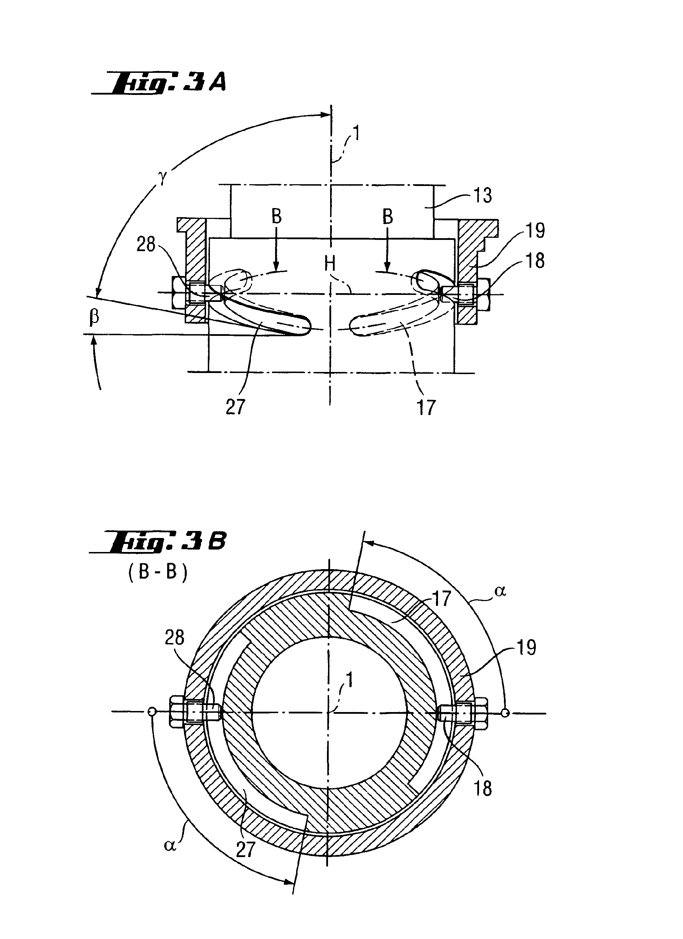

In den Figuren 1 und 2 erkennt man auch die stationären Dichtungen, zum Beispiel in Form von O-Ringen 52, 53, die zwischen den den jeweiligen Gleitdichtringen 14 zugewandten Stirnflächen der Kolben 13, bzw. 23 und den diesen Stirnflächen zugewandten Flächen der Gleitdichtringe 14, 24 angeordnet sind, wobei es sich versteht, daß entsprechende O-Ringe typischerweise in ringförmigen Nuten einer dieser einander direkt gegenüberliegenden Flächen aufgenommen sind. Entsprechende Dichtringe 52, 53 erkennt man auch in Figur 3.

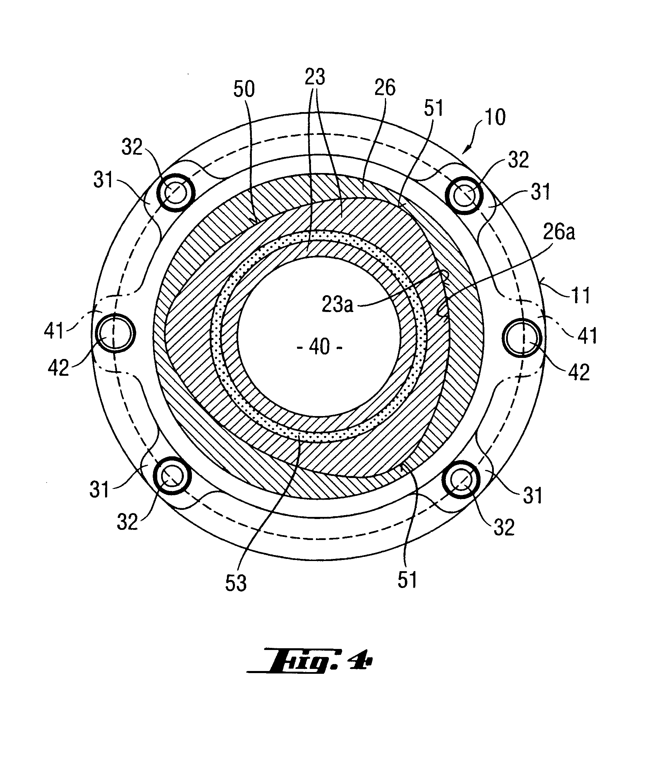

Die Figuren 3 und 4 zeigen im Prinzip die gleiche oder eine zumindest sehr ähnliche Ausführungsform, wie sie auch in den Figuren 1 und 2 dargestellt ist, wobei lediglich kleinere Details unterschiedlich dargestellt sind. Insbesondere sind in Figur 3 die Nuten bzw. Führungsbahnen 17, 27 in einer gegenüber den Figuren 1 und 2 verdrehten Position gezeigt, d. h. der Kolben 13 ist entsprechend verdreht. Man erkennt auf diese Weise besser die beiden diametral gegenüberliegenden, schraubenlinienförmig über jeweils einen Teil des Umfangs verlaufenden Führungsbahnen in Form der Nuten 17, 27, in welche ebenfalls diametral gegenüberliegende, am Spanring 19 befestigte Führungszapfen eingreifen, wie dies in den Figuren 3a und 3b nochmals dargestellt ist. Dabei ist der Kolben 13 selbst gegen eine Drehung relativ zum Gehäuse 11 gesichert, wobei eine Drehung des Spannringes durch den Eingriff der Führungszapfen 18, 28 in den Nuten eine axiale Verschiebung des Kolbens bewirkt

Gemeinsam ist allen dargestellten Versionen das Merkmal, dass sowohl am stehenden als auch am drehenden Maschinenteil ein axial beweglicher Kolben 13 bzw. 23 vorgesehen ist, der jeweils einen Gleitdichtring 14 bzw. 24 trägt, wobei im Betrieb der Vorrichtung die Gleitdichtflächen dieser Gleitdichtringe 14, 24 miteinander in Kontakt sind und gegeneinander vorgespannt sind, wobei beide Kolben in dieser Position ein gewisses axiales Spiel haben, um auf diese Weise Relativbewegungen zwischen dem drehenden und dem stehenden Maschinenteil, die von der reinen Rotationsbewegung um die gemeinsame Achse abweichen, auszugleichen. Diese gemeinsamen Merkmale definieren das Grundprinzip der vorliegenden Erfindung.

Figur 4 ist eine Schnittansicht gemäß einer Schnittlinie IV-IV in Figur 3, die verdeutlicht, wie der Haltering 26 mit einem stirnseitigen Vorsprung 23a des Kolbens 24 in verdrehsicherem Eingriff steht, da eine entsprechende Aussparung in dem Haltering 26 und der Vorsprung 23a am Kolben 24 eine nicht rotationssymmetrische Form haben und somit nicht gegeneinander verdrehbar sind. Konkret wurde hier die Form eines sogenannten "Gleichdicks" gewählt, welches annähernd die Form eines gleichseitigen Dreiecks mit abgerundeten Ecken 51 und ausgebauchten Seitenflächen 52 hat, wobei die Krümmungsradien so gewählt sind, dass diese abgerundeten Ecken und Seitenflächen mit stetiger Krümmung (d. h. "ohne Knick") ineinander übergehen.

Man erkennt im Übrigen in Figur 3, dass zwei Führungsbahnen bzw. Nuten 17, 27 auf gegenüberliegenden Seiten die gleiche axiale Position haben, wobei auf der rechten Seite entsprechender Führungszapfen 28 dargestellt ist, der dem Führungszapfen 18 diametral gegenüberliegend vorgesehen sein muss, um beim Verdrehen des Spannringes 19 die Führungszapfen 18, 28 auf beiden gegenüberliegenden Seiten gleichzeitig mit den entsprechenden Führungsbahnen 17, 27 in Eingriff zu bringen, damit die auf den Kolben 13 aufgebrachten Kräfte nur in axialer Richtung wirken und kein Verkippen oder Verkanten des Kolbens in der Führung 12 auftritt. Da der Spannring 19 aufgrund der (mehreren) Ausleger 31 und der Mitnehmer bzw. Verdrehsicherungsbolzen 32 in radialer Richtung nicht völlig frei zugänglich ist (siehe Figur 3) und da er im allgemeinen mit einem radial anzusetzenden Hebelwerkzeug oder dergleichen verdreht wird, sollte der zum Wechsel eines Gleitdichtringes 14 erforderliche Hub bzw. Abstand zu dem gegenüberliegenden Gleitdichtring 24 nach Möglichkeit schon durch eine Verdrehung des Spannringes 19 um etwa 80° bis 100° erreicht werden, um das Werkzeug nicht mehrfach ansetzen zu müssen. Die Steigung der Führungsbahnen 17, 27 muß dementsprechend ausgelegt werden. Andererseits sollte jedoch der Eingriff zwischen den Führungszapfen 18, 28 und der (bzw. den) Führungsbahn(en) 17, 27 selbsthemmend sein, damit während einer Montage der Spannring 19 nicht durch den Druck der Vorspannfeder zurückgedreht und dabei der Kolben 13 in unerwünschter Weise ausgefahren wird. In der Praxis wird deshalb der Steigungswinkel der Führungsbahn 17 gegenüber einer zur Achse 1 senkrechten Ebene auf einen kleinen Bereich zwischen etwa 5° und 20° beschränkt sein.

## Patentansprüche

1.    Drehdurchführung für eine axiale Überleitung von unter hohem Druck stehenden Fluiden von einem stehenden (10) in ein um eine Achse (1) drehbares Maschinenteil (20), mit einem stationären Gehäuse (11), welches eine axiale Durchtrittsöffnung (30) aufweist, und eine axiale Führung (12) für einen ersten hohlen Kolben (13) bildet, wobei der Kolben (13) axial verschiebbar aber abgedichtet in bzw. auf der Führung (12) des stationären Gehäuses (11) aufgenommen ist und an einem dem drehenden Maschinenteil (20) zugewandten Ende einen ersten Gleitdichtring (14) aufweist, der seinerseits abgedichtet an dem Kolben (13) befestigt ist und eine ebene Gleitdichtfläche (14a) für den dichtenden Gleitkontakt mit der ebenen Gleitdichtfläche (24a) eines zweiten, dem ersten gegenüberliegend Gleitdichtringes (24) aufweist, der an dem drehenden Maschinenteil (20) abgedichtet und gegenüber diesem verdrehsicher befestigt ist, und wobei der erste Kolben (13) mit dem ersten Gleitdichtring (14) in Richtung des zweiten Gleitdichtringes (24) federnd vorgespannt ist, wobei auch der zweite Gleitdichtring (14, 24) an einem axial beweglichen zweiten hohlen Kolben (23) vorgesehen ist, der in bzw. auf einer Führung (22) an dem drehenden Maschinenteil (20) axial verschiebbar und abgedichtet aufgenommen ist, wobei der zweite Kolben (23) mit der zweiten Gleitringdichtung (24) in Richtung der ersten Gleitringdichtung (14) federnd vorgespannt ist, **dadurch gekennzeichnet, dass** der erste und der zweite Gleitdichtring (14, 24) jeweils von dem zugehörigen Kolben (13, 23) abnehmbar und austauschbar ist und dass für den Austausch der Gleitdichtringe eine Einrichtung zum Begrenzen der maximal ausgefahrenen Position des Kolbens (13, 23) vorgesehen ist, welche einen Endanschlag für den Kolben entgegen der federnden Vorspannkraft des Kolbens bildet.

2.    Drehdurchführung nach Anspruch 1, **dadurch gekennzeichnet, daß** die Führung (12, 22) mindestens eines der Kolben (13, 23) diesen auf seiner Außenseite umfaßt.

3.    Drehdurchführung nach Anspruch 1 oder 2, **dadurch gekennzeichnet, daß** jeder der Gleitdichtringe (14, 24) von einem an dem ersten bzw. zweiten Kolben (13, 23) befestigbaren Haltering (16, 26) umfaßt und mit diesem fest verbunden ist.

4. Drehdurchführung nach Anspruch 3, **dadurch gekennzeichnet, daß** mindestens einer der beiden Halteringe (16, 26) mit einer Schnellkupplung (47, 48)an dem zugehörigen Kolben (13, 23) befestigbar ist.

5. Drehdurchführung nach Anspruch 4, **dadurch gekennzeichnet, daß** die Schnellkupplung (47, 48) ein Bajonettverschluß ist.

6. Drehdurchführung nach einem der Ansprüche 1 - 5, **dadurch gekennzeichnet, daß** mindestens einer der Kolben (13, 23) gegen eine Drehung relativ der zugehörigen Führung (12, 22) gesichert ist.

7. Drehdurchführung nach einem der Ansprüche 1 - 6, **dadurch gekennzeichnet, daß** eine Einrichtung zum weiteren Begrenzen einer axialen Ausfahrposition mindestens eines der Kolben (13, 23) gegen die federnde Vorspannkraft des Kolbens vorgesehen ist.

8. Drehdurchführung nach einem der Ansprüche 1 - 7, **dadurch gekennzeichnet daß** die Einrichtung zum Begrenzen der Ausfahrposition mindestens eines der Kolben (13,23) eine schraubenlinienförmig um den Kolben (13, 23) umlaufende Führungsbahn (17, 27) aufweist, die mit einem an der Führung (12, 22) um die Achse (1) der Drehdurchführung drehbar gelagerten Führungsteil (18, 28) in Eingriff steht.

9. Drehdurchführung nach Anspruch 8, **dadurch gekennzeichnet daß** die schraubenlinienförmige Führungsbahn (17, 27) unter einem Winkel zwischen 70° und 85 °relativ zur Achse verläuft.

10. Drehdurchführung nach Anspruch 6 oder einem der darauf rückbezogenen Ansprüche, **dadurch gekennzeichnet, daß** die Einrichtung als Drehsicherung mindestens einen Bolzen (32, 42) aufweist, der an dem stehenden bzw. drehenden Maschinenteil außerhalb des jeweiligen Kolbens und axial parallel zu diesem befestigt ist und eine Bohrung an einem radial nach außen ragenden Ansatz (31, 41) des Kolbens durchgreift.

11. Drehdurchführung nach einem der Ansprüche 1 bis 10, **dadurch gekennzeichnet, daß** an dem drehenden Maschinenteil ein an diesem abgedichtet befestigbares Gehäuse (21) vorgesehen ist, welches abgedichtet an dem drehenden Maschinenteil (20) befestigbar ist und welches eine axiale Durchtrittsöffnung (49) aufweist und eine axiale Führung (22) für den zweiten hohlen Kolben (23) bildet.

12. Drehdurchführung nach einem der Ansprüche 3 bis 11, **dadurch gekennzeichnet, daß** die ersten und zweiten Gleitringe (14, 24) und auch die Halteringe (16, 26) jeweils miteinander identisch ausgebildet sind.

13. Drehdurchführung nach einem der Ansprüche 1 bis 12, **dadurch gekennzeichnet, daß** mindestens ein Teil, insbesondere die Kolben (13, 23), und vorzugsweise alle Teile der Drehdurchführung des drehenden und des stehenden Maschinenteils identisch und miteinander austauschbar ausgebildet sind.

14. Drehdurchführung nach einem der Ansprüche 1 bis 13, **dadurch gekennzeichnet, daß** die Kolben (13, 23) mit den daran befestigten Gleitdichtringen (14, 24) zu mindestens 90% hydrostatisch kompensiert sind.

15. Drehdurchführung nach einem der Ansprüche 1 bis 14, **dadurch gekennzeichnet, daß** die Gleitdichtringe (14, 24) jeweils abgedichtet und verdrehsicher an den zugehörigen Kolben (13 bzw. 23) befestigbar sind.

## Claims

1. A rotary feedthrough for axial transfer of fluids under high pressure from a stationary machine part (10) into a machine part (20) rotatable about an axis (1) comprising a stationary housing (11) which has an axial passage opening (30) and forms an axial guide (12) for a first hollow piston (13), wherein the piston (13) is accommodated axially displaceably but in sealed relationship in or on the guide (12) of the stationary housing (11) and at an end towards the rotating machine part (20) has a first sliding sealing ring (14) which in turn is fixed in sealed relationship to the piston (13) and has a flat sliding sealing surface (14a) for sealing sliding contact with the flat sliding sealing surface (24a) of a second sliding sealing ring (24) opposite to the first, which is fixed in sealed relationship to the rotating machine part (20) and non-rotatably relative thereto and wherein the first piston (13) is resiliently biased with the first sliding sealing ring (14) in the direction of the second sliding sealing ring (24), wherein the second sliding sealing ring (14, 24) is also provided at an axially movable second hollow piston (23) which is accommodated axially displaceably and in sealed relationship in or on a guide (24) on the rotating machine part (20), wherein the second piston (23) is resiliently biased with the second sliding sealing ring (24) in the direction of the first sliding sealing ring (14), **characterised in that** the first and the second sliding sealing rings (14, 24) are respectively removable from the associated piston (13, 23) and are replaceable and that provided for replacement of the sliding sealing rings is a device for limiting the maximum extended position of the piston (13, 23) which forms an end abutment for the piston against the resilient biasing force of the piston.

2. A rotary feedthrough according to claim 1 **characterised in that** the guide (12, 22) of at least one of the pistons (13, 23) embraces same on its outside.

3. A rotary feedthrough according to claim 1 or claim 2 **characterised in that** each of the sliding sealing rings (14, 24) is embraced by and is fixedly connected to a holding ring (16, 26) which can be fixed to the first or the second piston (13, 23) respectively.

4. A rotary feedthrough according to claim 3 **characterised in that** at least one of the two holding rings (16, 26) can be fixed with a quick-action coupling (47, 48) to the associated piston (13, 23).

5. A rotary feedthrough according to claim 4 **characterised in that** the quick-action coupling (47, 48) is a bayonet fixing.

6. A rotary feedthrough according to one of claims 1 to 5 **characterised in that** at least one of the pistons (13, 23) is secured against rotation relative to the associated guide (12, 22).

7. A rotary feedthrough according to one of claims 1 to 6 **characterised in that** there is provided a device for further limiting an axial extension position of at least one of the pistons (13, 23) against the resilient biasing force of the piston.

8. A rotary feedthrough according to one of claims 1 to 7 **characterised in that** the device for limiting the extension position of at least one of the pistons (13, 23) has a guide path (17, 27) which extends helically around the piston (13, 23) and which is in engagement with a guide portion (18, 28) mounted to the guide (12, 22) rotatably about the axis (1) of the rotary feedthrough.

9. A rotary feedthrough according to claim 8 **characterised in that** the helical guide path (17, 27) extends at an angle between 70° and 85° relative to the axis.

10. A rotary feedthrough according to claim 6 or one of the claims appended thereto **characterised in that** the rotation-preventing device has at least one pin (32, 42) which is fixed to the stationary or rotating machine part outside the respective piston (13, 23) and axially parallel thereto and passes through a bore at a radially outwardly projecting shoulder (31, 41) of the piston.

11. A rotary feedthrough according to one of claims 1 to 10 **characterised in that** provided on the rotating machine part is a housing (21) which can be fixed thereto in sealed relationship and which can be fixed in sealed relationship to the rotating machine part (20) and which has an axial passage opening (49) and forms an axial guide (22) for the second hollow piston (23).

12. A rotary feedthrough according to one of claims 3 to 11 **characterised in that** the first and second sliding rings (14, 24) and also the holding rings (16, 26) are respectively identical to each other.

13. A rotary feedthrough according to one of claims 1 to 12 **characterised in that** at least one part, in particular the pistons (13, 23), and preferably all parts of the rotary feedthrough of the rotating and the stationary machine part are identical and interchangeable with each other.

14. A rotary feedthrough according to one of claims 1 to 13 **characterised in that** the pistons (13, 23) with the sliding sealing rings (14, 24) fixed thereto are at least 90% hydrostatically compensated.

15. A rotary feedthrough according to one of claims 1 to 14 **characterised in that** the sliding sealing rings (14, 24) can be respectively fixed in sealed relationship and non-rotatably to the associated piston (13 and 23 respectively).

**EP 2 281 135 B1**

**Revendications**

1. Passage tournant pour transfert axial de fluides sous haute pression d'une partie de machine fixe (10) dans une partie de machine (20) qui peut tourner autour d'un axe (1), comprenant un carter fixe (11) qui présente une ouverture de passage axiale (30) et qui forme un guidage axial (12) pour un premier piston creux (13), le piston (13) étant logé à joint étanche dans ou sur le guidage (12) du boîtier fixe (11) de façon à pouvoir se déplacer dans la direction axiale et présentant, à une extrémité dirigée vers la partie de machine tournante (20), une première bague d'étanchéité rotative (14) qui, de son côté, est fixée à joint étanche au piston (13) et présente une surface d'étanchéité glissante plane (14a) pour le contact glissant à joint étanche avec la surface d'étanchéité glissante plane (24a) d'une deuxième bague d'étanchéité rotative (24) qui fait face à la première, et qui est fixée à joint étanche à la partie de machine tournante (20) et est solidaire de cette dernière en rotation, et le premier piston (13) étant précontraint élastiquement par la première bague d'étanchéité rotative (14) en direction de la deuxième bague d'étanchéité rotative (24), la deuxième bague d'étanchéité rotative (14, 24) étant elle aussi prévue sur un deuxième piston creux (23) logé à joint étanche et de façon à pouvoir se déplacer dans la direction axiale dans ou sur un guidage (22) au niveau de la partie de machine tournante (20), le deuxième piston (23) étant précontraint élastiquement par la deuxième bague d'étanchéité rotative (24) en direction de la première bague d'étanchéité rotative (14), **caractérisé en ce que** chacune des première et seconde bagues d'étanchéité rotatives (14, 24) peut être séparée du piston correspondant (13, 23) et remplacée, et **en ce que**, pour le remplacement des bagues d'étanchéité rotatives, il est prévu un dispositif servant à limiter la position de sortie maximum du piston (13, 23), qui forme une butée de fm de course pour le piston à l'encontre de la force de précontrainte élastique du piston.

2. Passage tournant selon la revendication 1, **caractérisé en ce que** le guidage (12, 22) d'au moins un des pistons (13, 23) entoure ce dernier sur son côté extérieur.

3. Passage tournant selon la revendication 1 ou 2, **caractérisé en ce que** chacune des bagues d'étanchéité rotatives (14, 24) est entourée d'une bague de retenue (16, 26) qui peut être fixée au premier piston ou au deuxième piston (13, 23) et y être reliée rigidement.

4. Passage tournant selon la revendication 3, **caractérisé en ce qu'**au moins une des deux bagues de retenue (16, 26) peut être fixée au piston correspondant (13, 23) au moyen d'un raccord rapide (47, 48).

5. Passage tournant selon la revendication 4, **caractérisé en ce que** le raccord rapide (47, 48) est une fermeture à baïonnette.

6. Passage tournant selon l'une des revendications 1 à 5, **caractérisé en ce qu'**au moins un des pistons (13, 23) est bloqué contre toute rotation par rapport au guidage correspondant (12, 22).

7. Passage tournant selon l'une des revendications 1 à 6, **caractérisé en ce qu'**il est prévu un dispositif pour limiter davantage une position axiale de sortie d'au moins un des pistons (13, 23) à l'encontre de la force de précontrainte élastique du piston.

8. Passage tournant selon l'une des revendications 1 à 7, **caractérisé en ce que** le dispositif servant à limiter la position de sortie d'au moins un des pistons (13, 23) présente une voie de guidage (17, 27) s'étendant en hélice autour du piston (13, 23) et qui est en prise avec une partie de guidage (18, 28) montée sur le guidage (12, 22) de façon à pouvoir tourner autour de l'axe (1) du passage tournant.

9. Passage tournant selon la revendication 8, **caractérisé en ce que** la voie de guidage en forme d'hélice (17, 27) s'étend en formant un angle compris entre 70° et 85° par rapport à l'axe.

10. Passage tournant selon la revendication 6 ou l'une des revendications qui y sont rattachées, **caractérisé en ce que** le dispositif empêchant la rotation présente au moins un tourillon (32, 42) qui est fixé à la partie de machine fixe ou tournante, en dehors du piston correspondant (13, 23) et parallèlement à l'axe de ce dernier, et qui traverse un perçage d'une protubérance (31, 41) du piston qui fait saillie radialement vers l'extérieur.

11. Passage tournant selon l'une des revendications 1 à 10, **caractérisé en ce que** sur la partie de machine tournante est prévu un carter (21) pouvant être fixé à joint étanche à cette partie de machine, qui peut être fixé à joint étanche à la partie de machine tournante (20) et qui présente une ouverture de passage axiale (49) et forme un guidage axial (22) pour le deuxième piston creux (23).

**12.** Passage tournant selon l'une des revendications 3 à 11, **caractérisé en ce que** les première et seconde bagues rotatives (14, 24), comme aussi les bagues de retenue (16, 26), sont de construction identique entre elles.

**13.** Passage tournant selon l'une des revendications 1 à 12, **caractérisé en ce qu'**au moins une partie, en particulier les pistons (13, 23), et de préférence toutes les parties, du passage tournant de la partie de machine tournante et de la partie de machine fixe sont de construction identique et interchangeables entre elles.

**14.** Passage tournant selon l'une des revendications 1 à 13, **caractérisé en ce que** les pistons (13, 23), avec les bagues d'étanchéité rotatives (14, 24) qui y sont fixées (14, 24) sont à compensation hydrostatique pour au moins 90 %.

**15.** Passage tournant selon l'une des revendications 1 à 14, **caractérisé en ce que** les bagues d'étanchéité rotatives (14, 24) peuvent être fixées chacune à joint étanche et pour être solidaires en rotation avec le piston correspondant (13 ou 23).

*Fig. 1*

Fig. 2

EP 2 281 135 B1

Fig. 3

16

## Fig. 3 A

## Fig. 3 B
( B - B )

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10135533
- EP 1724502 A2
- EP 1630347 A1
- EP 1526316 A1